# EUROPÄISCHE PATENTSCHRIFT

(11) **EP 3 687 752 B1**
(45) Veröffentlichungstag und Bekanntmachung des Hinweises auf die Patenterteilung: **01.12.2021**
(21) Anmeldenummer: 18818983.1
(22) Anmeldetag: 25.09.2018
(51) Int. Cl.: B29B 9/06, B29C 48/00, B29C 48/05, B29C 48/14, B29C 48/345, B29C 48/04

(54) **SCHNEIDKAMMERGEHÄUSE FÜR UNTERWASSERGRANULATOR**
CUTTING CHAMBER HOUSING FOR AN UNDERWATER PELLETIZER
BOÎTIER DE CHAMBRE DE COUPE POUR GRANULATEUR SOUS EAU

(30) Priorität: 29.09.2017 DE 102017009177
(43) Veröffentlichungstag der Anmeldung: 05.08.2020
(73) Patentinhaber: Maag Automatik GmbH, 63762 Großostheim (DE)
(72) Erfinder: FISCHER, Florian, 85560 Ebersberg (DE)
(74) Vertreter: Thoma, Michael
(86) Internationale Anmeldenummer: PCT/EP2018/000449
(87) Internationale Veröffentlichungsnummer: WO 2019/063123

(56) Entgegenhaltungen:
- EP-A1- 0 541 815
- DE-A1-102009 057 781
- GB-A- 849 935
- GB-B- 2 017 571
- JP-A- 2001 105 429
- US-A- 5 215 763
- US-A1- 2014 087 047

## Beschreibung

Die Erfindung betrifft ein Schneidkammergehäuse für einen Unterwassergranulator mit einem Einlass für Kühlfluid und einem Auslass für Kühlfluid mit Granulat, wobei das Schneidkammergehäuse weiterhin eine Schneidvorrichtung mit einem Rotationsantrieb und einem Schneidkopf mit rotierenden Schneidmessern und einen Extrusionskopf mit Lochplatte für einen Austritt von strangförmig geformten, geschmolzenem Kunststoff umschließt, wobei die Austrittsrichtung des Kunststoffs und die Rotationsachse der Schneidvorrichtung horizontal bzw. im Wesentlichen horizontal, d.h. mit Abweichung von der Horizontalen im einstelligen Winkelgradbereich, ausgerichtet sind und die Einlassrichtung des Kühlfluids und die Auslassrichtung des Kühlfluids mit Granulat senkrecht bzw. senkrecht dazu ausgerichtet sind.

Ein derartiges Schneidkammergehäuse ist aus der Druckschrift DE 10 2006 000 491 B4 bekannt. Dazu offenbart die Druckschrift einen Unterwassergranulator, der eine Düsen aufweisende Lochplatte besitzt, durch die zu verarbeitendes geschmolzenes Material in horizontaler Richtung extrudiert wird. Eine Schneidvorrichtung zum Schneiden des von den Düsen in horizontaler Richtung extrudierten thermoplastischen Kunststoffmaterials zu Granulaten wird in dem Schneidkammergehäuse bereitgestellt. Dazu weist die Schneidvorrichtung eine horizontal ausgerichtete Rotationsachse auf, wobei die abgeschnittenen Granulate durch ein Kühlfluid, das vertikal zur Austrittsrichtung von einem vertikal unten in Bezug auf die horizontale Rotationsachse angeordneten Einlass des Kühlfluids zu einem vertikal oberen Auslass des Kühlfluids mit den Granulaten strömt. Dazu weist das Schneidkammergehäuse in einer Vorderansicht gesehen eine kreisförmige Form auf, und der Einlass zum Einbringen von Kühlfluid in das Schneidkammergehäuse sowie der Auslass zum Abgeben des Kühlfluids mit dem Granulat aus dem Innern des Schneidkammergehäuses nach außen weisen gemäß der Druckschrift DE 10 2006 000 491 B4 eine divergierende Form auf, damit das Kühlmedium zu der Lochplatte im Innern des Schneidkammergehäuses geführt wird.

Ein derartiges Schneidkammergehäuse bildet einen kompakten rohrförmig horizontal ausgerichteten Behälter, der keinerlei Möglichkeiten bietet, in der Anlaufphase der Unterwassergranulierung oder in der Anlaufphase des strangförmigen ausströmenden. Kunststoffes aus der Lochplatte in den Prozess einzugreifen bis ein thermisches Gleichgewicht zwischen strangförmig ausströmender Kunststoffschmelze aus der Lochplatte und der Ausbildung von Granulaten durch die rotierenden Schneidmesser der Schneidvorrichtung erreicht ist.

Die Schrift GB 2017 571 B zeigt einen Unterwassergranulierer mit einem Schneidkammergehäuse, das einen Einlass für Kühlfluid und einen Auslass für Kühlfluid mit Granulat aufweist, wobei das Schneidkammergehäuse weiterhin eine Schneidvorrichtung mit einem Rotationsantrieb und einem Schneidkopf mit rotierenden Schneidmessern und einem Extrusionskopf mit Lochplatte für einen Austritt von strangförmig geformten, geschmolzenem Kunststoff umschließt, wobei die Austrittsrichtung des Kunststoffs und die Rotationsachse der Schneidvorrichtung horizontal ausgerichtet sind, und die Einlassrichtung des Kühlfluids und die Auslassrichtung des Kühlfluids mit Granulat senkrecht ausgerichtet sind.

Ferner zeigt die Schrift US 2017/0087047 A1 1 ein Schneidkammergehäuse für einen Granulierer, das mittig entlang einer vertikalen Ebene geteilt ist, wobei die beiden Gehäusehälften um eine aufrechte Achse aufschwenkbar sind, um Zugang zum Schneidmesser zu haben.

Weiterhin zeigt die Druckschrift DE 296 24 638 U1 ein Schneidkammergehäuse, wie es Figur 7 als Stand der Technik im Detail zeigt. Auch in diesem Fall bildet ein horizontal ausgerichteter Rohransatz 22 das Schneidkammergehäuse 2, an das über einen Ringflansch 21 ein nicht gezeigter Rotationsantrieb angeflanscht ist. Orthogonal zu dem horizontal ausgerichteten Rohransatz 22 weist das bekannte Schneidkammergehäuse 2 einen rohrförmigen Einlass 23 für das Kühlfluid auf, der senkrecht von unten zu der Austrittsrichtung des Kunststoffs aus der Lochplatte 9 eines Extrusionskopfes 25 ausgerichtet ist, so dass das Kühlfluid den Messerträger bzw. dessen Achse dort umströmt und vertikal nach oben zu einem rohrförmigen Auslass 24 für das Kühlfluid mit Granulat strömen kann.

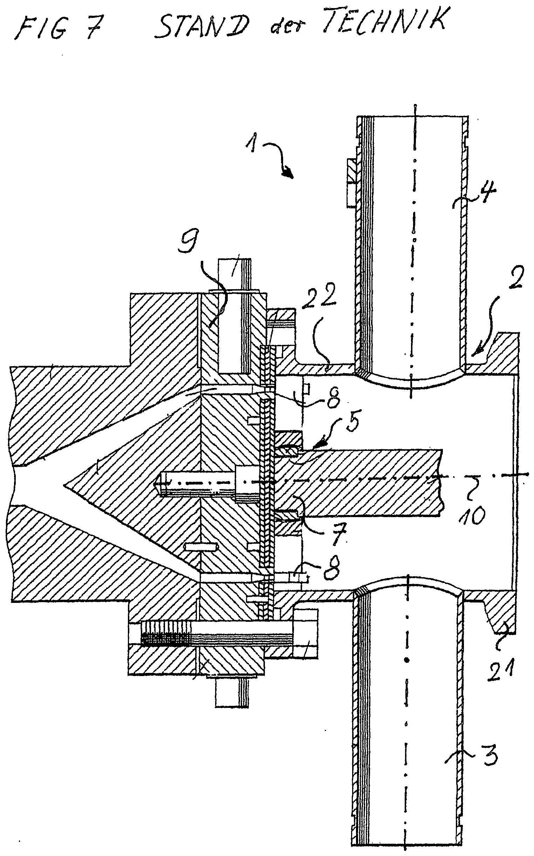

Wie Figur 7 deutlich zeigt, ist auch hier das Schneidkammergehäuse 2 eine kompakte zusammengeschweißte Kreuzung von Rohransätzen, die den horizontalen Rohransatz 22 des Schneidkammergehäuses 2 und die zusätzlich dazu senkrecht angeordneten Rohransätze für den rohrförmigen Einlass 23 und den rohrförmigen Auslass 24 des Schneidkammergehäuses 2 bilden. Diese kompakte Ausbildung des Schneidkammergehäuses 2 lässt einen Eingriff in das Verfahren während der Anlaufphase unter Ausbildung von strangförmiger Kunststoffschmelze in der Lochplatte 9 und der darauf folgenden Granulierung durch die Schneidvorrichtung 5 nicht zu, da das Schneidkammergehäuse 2 eine feststehende Zuordnung darstellt zwischen horizontalem Austritt der Kunststoffschmelze aus der Lochplatte 9 und dem vertikalen Auslass 24 der abgeschnittenen Granulate mittels der vertikalen Strömung des Kühlfluids von unten nach oben.

Aufgabe der Erfindung ist es, ein Schneidkammergehäuse zu schaffen, das die Möglichkeit bietet, sowohl in der Anlaufphase der strangförmigen Schmelzebildung in der Lochplatte als auch in der Anlaufphase der Granulierung durch Stränge am Ausgang der Lochplatte zu Granulaten einzugreifen, bis ein stabiler Prozessablauf gewährleistet werden kann und damit die Nachteile im Stand der Technik überwunden werden. Da durch den kompakten Aufbau des Schneidkammergehäuses bisher jeweils eine verhältnismäßig lange Anlaufphase durchzuführen ist, bis konstante Eigenschaften des Extrudats und ein stabiler Granulierprozess erreicht wird, ist es auch Aufgabe der Erfindung, dass die Anlaufphase bei der Unterwassergranulation wirtschaftlicher durchführbar wird. Schließlich soll für Inspektions-, Wartungs- und Instandhaltungsarbeiten die Zugänglichkeit zu der Schneidvorrichtung 5 und zu dem Rotationsantrieb 6 und Antriebswelle 34 verbessert und die Arbeitszeiten für Inspektions-, Wartungs- und Instandhaltungsarbeiten verkürzt werden.

Diese Aufgabe wird mit dem Gegenstand des Anspruchs 1 gelöst. Vorteilhafte Weiterbildungen der Erfindung ergeben sich mit den Merkmalen der abhängigen Ansprüche des anliegenden Anspruchssatzes.

Die Erfindung betrifft somit ein Schneidkammergehäuse für einen Unterwassergranulator mit einem Einlass für Kühlfluid und einem Auslass für Kühlfluid mit Granulat. Das Schneidkammergehäuse umschließt eine Schneidvorrichtung mit einem Rotationsantrieb und einem Schneidkopf mit rotierenden Schneidmessern. In das Schneidkammergehäuse ragt ein Extrusionskopf mit einer Lochplatte hinein. Aus der Lochplatte tritt ein strangförmig geformter, geschmolzener Kunststoff in einer horizontalen Austrittsrichtung heraus, der von den rotierenden Schneidmessern des rotierenden Schneidkopfes mit horizontal bzw. im Wesentlichen horizontal, d.h. mit Abweichung von der Horizontalen im einstelligen Winkelgradbereich, ausgerichteter Rotationsachse granuliert wird, dabei sind die Einlassrichtung des Kühlfluids und die Auslassrichtung des Kühlfluids mit Granulat senkrecht bzw. senkrecht dazu, d.h. senkrecht zur Austrittsrichtung der Kunststoffschmelze, bzw. im Wesentlichen senkrecht, d.h. mit Abweichung von der Senkrechten im einstelligen Winkelgradbereich, ausgerichtet. Das Schneidkammergehäuse weist eine feststehende vertikal obere Gehäusehälfte und eine bewegbare vertikal untere Gehäusehälfte entlang einer schrägwinklig in Bezug auf eine horizontal ausgerichtete Austrittsrichtung des Kunststoffs angeordnete Trennfläche auf. Die Trennfläche verläuft in Seitenansicht des Schneidkammergehäuses gesehen schräg in Längsrichtung des Schneidkammergehäuses oder in Frontalansicht der Lochplatte gesehen schräg in Querrichtung des Schneidkammergehäuses. Das Schneidkammergehäuse ist so entlang der Trennfläche zumindest nach unten zu öffnen.

Die Trennfläche kann also gegenüber der Austrittsrichtung von schräg unten unterhalb des Bereichs der Lochplatte nach schräg oben oberhalb des Bereichs des Rotationsantriebs oder gegenüber der Austrittsrichtung von schräg oben oberhalb des Bereichs der Lochplatte nach schräg unten unterhalb des Bereichs des Rotationsantriebs oder in Frontalansicht der Lochlatte gesehen von links oder rechts oben schräg nach rechts bzw. links unten verlaufen.

Die Trennfläche kann als ein- oder mehrteilige Trennebene, gegebenenfalls mit unterschiedlich geneigten Ebenenabschnitten, oder als zumindest teilweise gekrümmte Fläche, z.b. konkav oder konvex oder mit konkaven oder konvexen Abschnitten ausgebildet sein.

Ein derartiges Schneidkammergehäuse hat den Vorteil, dass entlang der Trennfläche die vertikal untere bewegbare Schneidkammergehäusehälfte sowohl für die Anlaufphase der Austrittsströmung von Kunststoffschmelze aus der Lochplatte als auch die Anlaufphase des eigentlichen Granulierens durch Öffnen des Schneidkammergehäuses verkürzt werden kann, weil nicht einsetzbares Kunststoffmaterial in der Anlaufphase aus der feststehenden vertikal oberen Schneidkammergehäusehälfte frei nach unten ausströmen kann, bis ein kontinuierlicher Schmelzefluss und ein kontinuierliches Granulieren erreicht ist. Darüber hinaus kann nach Wegschwenken und/oder Entfernen der bewegbaren unteren Schneidkammergehäusehälfte für Inspektions-, Wartungs- und Instandhaltungszwecke die Zugänglichkeit zu den von dem Schneidkammergehäuse umschlossenen Komponenten des Unterwassergranulators vereinfacht und wirtschaftlich verbessert werden. Die erfindungsgemäß schrägwinklige Ausrichtung der Trennebene ergibt eine entsprechend geformte obere bzw. untere Gehäusehälfte, welche durch die entsprechend schräg verlaufenden Kanten entlang der Trennebene zusätzliche Versteifung der Seitenbereiche erfahren, was deren Handhabbarkeit verbessert, da dadurch ein Verwinden der jeweiligen Gehäusehälfte in sich verhindert wird.

In einer Ausführungsform verläuft die Trennfläche, wie bereits erwähnt, entlang einer Diagonalen des Schneidkammergehäuses, die gegenüber der Austrittsrichtung der Kunststoffschmelze von schräg unten unterhalb des Bereichs der Lochplatte nach schräg oben oberhalb des Bereichs des Rotationsantriebs verläuft. Diese diagonale Lösung hat den Vorteil, dass an mehreren Seitenrändern in Bezug auf die Trennfläche einerseits Abdichtmöglichkeiten geschaffen werden können und andererseits entfernbare oder bewegbare Verbindungselemente zwischen dem oberen festen Gehäuse und dem unteren beweglichen Gehäuse angebracht werden können.

Die Variationsmöglichkeiten des Verlaufs der schrägwinklig verlaufenden Trennfläche sind derart vielfältig, dass nicht jede der Möglichkeiten durch einen entsprechenden Anspruch belegt werden kann. In einer der möglichen Ausführungsformen ist die untere bewegbare Gehäusehälfte über wenigstens ein Schwenkgelenk mit der oberen feststehenden Gehäusehälfte schwenkbar verbunden. Da bei einem quaderförmigen Schneidkammergehäuse vier Randseiten durch die Trennfläche bestimmt werden, sind allein dadurch vier Varianten möglich, ein seitliches Schwenkgelenk anzubringen.

In einer vorteilhaften Ausführungsform der Erfindung ist zwischen der oberen feststehenden Gehäusehälfte und der unteren bewegbaren Gehäusehälfte das Schwenkgelenk derart angeordnet, dass dessen Schwenkachse horizontal und oberhalb des Bereichs des Rotationsantriebs angeordnet ist und rechtwinklig zur Austrittsrichtung der Kunststoffschmelze aus der Lochplatte ausgerichtet ist. Mit einem derartigen Schwenkgelenk kann die untere bewegbare Gehäusehälfte nach unten ausschwingen, ohne von dem Rotationsantrieb behindert zu werden. Die senkrecht untere Schneidkammergehäusehälfte kann um die horizontale Achse weg von der feststehenden Gehäusehälfte bewegt werden und von einem schmalen Spalt bis zu einer vollen Öffnungsbreite der Trennfläche zwischen feststehender oberen Gehäusehälfte und bewegbarer unteren Gehäusehälfte variieren. Beim Schließen des Schneidkammergehäuses durch Zusammenführen von unterer Gehäusehälfte mit oberer Gehäusehälfte wird gleichzeitig durch entsprechende Dichtungseinlagen in den Rändern der beiden Gehäusehälften entlang der Trennfläche das Schneidkammergehäuse gegen Kühlfluidverlust abgedichtet. Auch eine Anordnung der Schwenkachse beispielsweise horizontal und unterhalb des Bereichs des Rotationsantriebs ist möglich. Auch eine Anordnung der Schwenkachse beispielsweise vertikal oder im Bereich oberhalb oder unterhalb des Bereichs der Lochplatte kann möglich sein.

Anstelle einer horizontalen Ausrichtung der Schwenkachse oberhalb des Rotationsantriebs ist es in einer weiteren Ausführungsform vorgesehen, dass zwischen der oberen feststehenden Gehäusehälfte und der unteren bewegbaren Gehäusehälfte das Schwenkgelenk so angeordnet ist, dass dessen Schwenkachse entlang der schrägen Trennfläche auf einem vorderen oder einem hinteren Begrenzungsrand des Schneidkammergehäuses angeordnet ist. Bei einem quaderförmigen Schneidkammergehäuse ist die Anbringung einer Schwenkachse auf einem hinteren oder vorderen Begrenzungsrand kein Problem. Bei einer wannenförmigen Ausbildung des Schneidkammergehäuses kann dieses nur in dem Bereich erfolgen, in dem die vordere und die hintere Begrenzungswand geradlinig verlaufen. Dadurch wird die Länge der Schwenkachse zwar verkürzt, aber die Wirkung in Bezug auf das Öffnen und Schließen der bewegbaren Schneidkammergehäusehälfte wird nicht beeinflusst, da auch die halbe Schwenkachsenlänge ausreicht, um sicher die bewegbare Schneidkammergehäusehälfte mit der feststehenden oberen Schneidkammergehäusehälfte zu koppeln. Natürlich müssen auch hier Klemmelemente vorgesehen werden, um die beiden Gehäusehälften in den Randbereichen aufeinander zu pressen.

Eine weit größere Variantenbreite bietet eine Ausführungsform, bei der die untere bewegbare Gehäusehälfte über wenigstens ein Drehgelenk mit der oberen feststehenden Gehäusehälfte drehbar verbunden ist. Das Drehgelenk kann auf jedem Punkt der Randseiten entlang der Trennfläche zwischen oberem feststehenden Gehäuse und unterem bewegbaren Gehäuse angeordnet sein. Dabei ist lediglich zu berücksichtigen, dass das Drehgelenk mehrachsig ausgebildet sein sollte, um beweglich genug zu sein, den Rotationsantrieb bei Bedarf freizulegen.

In einer weiteren Ausführungsform ist es vorgesehen, dass das Schwenkgelenk zwei entlang der Schwenkachse ausgerichtete Drehgelenke aufweist. Diese beiden Drehgelenke, die entlang der Schwenkachse ausgerichtet sind, dienen praktisch als Schwenkgelenk und können entsprechend an äußeren Randseiten des Schneidkammergehäuses mit dem Vorteil angeordnet sein, dass sie nur punktweise im Bereich der jeweiligen Schwenkachse und nicht durchgängig wie ein Schwenkgelenk angeordnet sind.

In einer weiteren Ausführungsform ist es vorgesehen, dass die untere bewegbare Gehäusehälfte mittels Gleitelementen mit Gleitschienen der oberen feststehenden Gehäusehälfte verschiebbar verbunden ist. Dazu ist es in einer weiteren Ausführungsform der Erfindung vorgesehen, dass die obere feststehende Gehäusehälfte im Bereich der schrägen Trennfläche auf dem vorderen oder dem hinteren Begrenzungsrand des Schneidkammergehäuses jeweils eine vordere oder eine hintere Gleitschiene aufweist, und an der unteren bewegbaren Gehäusehälfte Gleitelemente angeordnet sind, die mit den Gleitschienen verschiebbar in Eingriff stehen.

Aufgrund des Rotationsantriebs ist ein Schieben entlang der Trennfläche nur begrenzt möglich, so dass diese Ausführungsform lediglich einen Spalt zwischen der oberen feststehenden Gehäusehälfte und der unteren bewegbaren Gehäusehälfte beim Verschieben der unteren bewegbaren Gehäusehälfte entlang der Trennfläche öffnet. Jedoch kann ein vertikal unterer Spalt ausreichen, um in der Anlaufphase der Austrittsströmung von Kunststoffschmelze aus der Lochplatte sowie auch in der Anlaufphase der Schneidvorrichtung das zunächst nicht für die Produktion verwertbare Anlaufmaterial über den Spalt nach unten abzuführen. Somit kann auch diese Ausführungsform der Erfindung die Anlaufphasen deutlich verkürzen.

Eine weitere Möglichkeit besteht mit der Ausführungsform, bei der vorzugsweise die untere bewegbare Gehäusehälfte mittels Klinkenelementen mit der oberen feststehenden Gehäusehälfte einklinkbar verbunden ist. Dazu weisen vorbereitend die Ränder sowohl der oberen feststehenden Gehäusehälfte als auch der unteren bewegbaren Gehäusehälfte Flansche auf, über welche die Klinkenelemente fixierend in Eingriff bringbar sind, so dass die Flansche in den Rändern der oberen und unteren Schneidkammergehäusehälften mittels entsprechender Dichtmaterialen zum einen mediendicht abgedichtet werden können und zum anderen für die Anlaufphasen von Lochplatte und Schneidvorrichtung voneinander nach Entfernen der Klinkenelemente getrennt werden können.

In einer weiteren Ausführungsform der Erfindung ist es vorgesehen, dass die untere bewegbare Gehäusehälfte mittels linearem Bajonettverschluss entlang der schrägen Trennfläche mit der oberen feststehenden Gehäusehälfte verriegelbar verbunden ist.

In einer weiteren Ausführungsform der Erfindung sind der Einlass für Kühlfluid und der Auslass für Kühlfluid mit Granulat an der oberen feststehenden Gehäusehälfte beabstandet angeordnet. Durch diese Anordnung entfällt in vorteilhafter Weise die Zuführung des Kühlfluids über eine bewegbare untere Gehäusehälfte, die damit keinen feststehenden Einlass aufweist und unabhängig von Einlass und Auslass bewegt werden kann.

Weiterhin ist es bei einer Ausführungsform der Erfindung vorgesehen, dass die Schneidvorrichtung mit dem Rotationsantrieb und der Schneidkopf mit rotierenden Schneidmessern an der oberen feststehenden Gehäusehälfte angeordnet sind, wobei der Rotationsantrieb teilweise aus der oberen feststehenden Gehäusehälfte nach unten aus der Trennfläche herausragt. Dazu kann die obere Gehäusehälfte ein Verbindungselement aufweisen, mit dem der Rotationsantrieb in einer feststehenden, aber abnehmbaren Position gehalten wird. Dadurch wird die Konstruktion der unteren Schneidkammergehäusehälfte wesentlich vereinfacht.

Darüber hinaus kann in einer weiteren Ausführungsform der Erfindung die untere bewegbare Gehäusehälfte Umlenkstrukturen aufweisen, die das aus dem an der feststehenden oberen Gehäusehälfte angeordneten Einlass beabstandet zum Schneidkopf senkrecht von oben in das Schneidkammergehäuse eintretende Kühlfluid in eine schraubenförmige Zirkulation zwischen oberer und unterer Gehäusehälfte überführt und auf den Schneidkopf zuführt und in den senkrecht nach oben oberhalb des Schneidkopfes an dem feststehenden Gehäuse angeordneten Auslass des Kühlfluids mit Granulat senkrecht nach oben umlenkt. Diese Umlenkung kann durch eine wannenförmige Ausbildung des Schneidkammergehäuses erreicht werden. Zusätzlich können schraubenförmig angeordnete Umlenkbleche in der unteren Gehäusehälfte angeordnet sein, um die Umlenkung in einen Zirkularstrom des Kühlfluids zu unterstützen.

Weiterhin ist es in einer Ausführungsform vorgesehen, dass die untere und obere Gehäusehälfte Druckgussmaterial einer Metalllegierung aufweisen, vorzugsweise eine Bronzealuminiumlegierung, die aufgrund des Aluminiumgehalts eine Aluminiumoxidhaut auf den Außenoberflächen bildet und damit in vorteilhafter Weise Korrosion und Oxidation durch das Kühlfluid, das vorzugsweise aus Wasser ist, verhindert.

Die Erfindung wird nun anhand der beigefügten Figuren näher erläutert.
- Figur 1: zeigt eine erste Ausführungsform der Erfindung mit teilweise aufgeschnittenem wannenförmigen Schneidkammergehäuse im Querschnitt als Längsseitenansicht (FIGUR 1A) und Rückseitenansicht (FIGUR 1B);
- Figur 2: zeigt eine zweite Ausführungsform der Erfindung mit teilweise aufgeschnittenem quaderförmigen Schneidkammergehäuse im Querschnitt als Längsansicht (FIGUR 2A) und Rückseitenansicht (FIGUR 2B);
- Figur 3A: zeigt eine weitere Ausführungsform der Erfindung mit einem Schwenkgelenk zwischen oberer und unterer Schneidkammergehäusehälfte im Querschnitt als Längsseitenansicht und Rückseitenansicht;
- Figur 3B: zeigt die Ausführungsform gemäß Figur 3A mit abgeschwenkter unterer Schneidkammergehäusehälfte im Querschnitt als Längsseitenansicht;
- Figur 4A: zeigt eine andere Ausführungsform der Erfindung mit verkürzter unterer und oberer Schneidkammergehäusehälfte, wobei die untere Schneidkammergehäusehälfte als U-förmige Abdeckung ausgebildet ist, die von unten an die obere Schneidkammergehäusehälfte anbringbar und mittels Klemmelementen fixierbar ist, im Querschnitt als Längsseitenansicht und Rückseitenansicht;
- Figur 4B: zeigt die Ausführungsform gemäß Figur 4A mit entfernter unterer Schneidkammergehäusehälfte, im Querschnitt als Längsseitenansicht und Rückseitenansicht;
- Figur 5A: zeigt eine noch andere Ausführungsform der Erfindung mit im Eingriff stehenden Gleitschienen zwischen oberer und unterer Schneidkammergehäusehälfte, im Querschnitt als Längsseitenansicht und Rückseitenansicht;
- Figur 5B: zeigt die Ausführungsform gemäß Figur 5A mit gegeneinander verschobenen oberen und unteren Schneidkammergehäusehälften, im Querschnitt als Längsseitenansicht und Rückseitenansicht;
- Figur 6A: zeigt eine weitere Ausführungsform der Erfindung mit Klinkenelementen zwischen oberer und unterer Schneidkammergehäusehälfte, im Querschnitt als Längsseitenansicht und Rückseitenansicht;
- Figur 6B: zeigt die Ausführungsform gemäß Figur 6A mit entfernten Klinkenelementen und entfernter unterer Schneidkammergehäusehälfte, im Querschnitt als Längsseitenansicht und Rückseitenansicht.
- Figur 7: zeigt einen Unterwassergranulator mit Schneidkammergehäuse gemäß dem Stand der Technik.

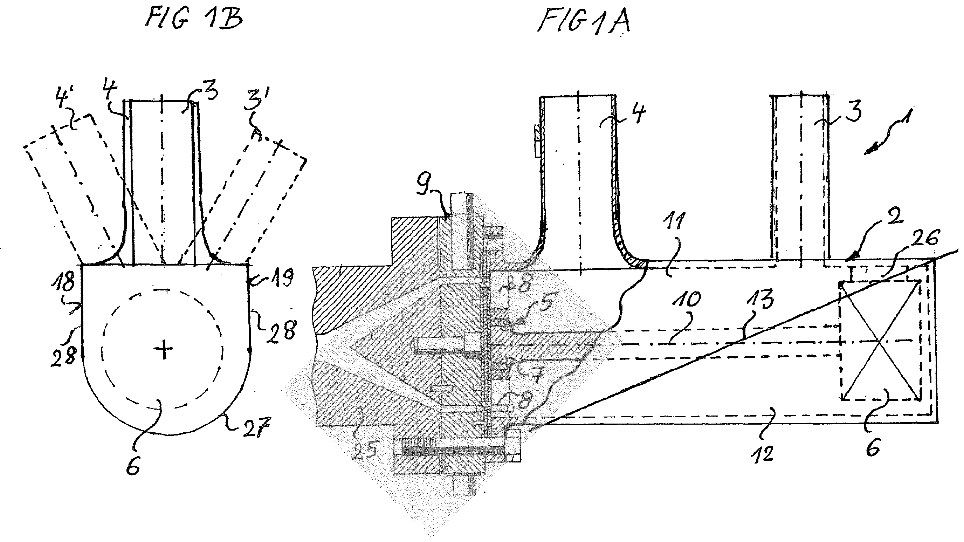

Figur 1A zeigt eine Längsseitenansicht eines Unterwassergranulators 1 mit einem wannenförmigen Schneidkammergehäuse 2, das teilweise im Querschnitt aufgeschnittenen ist, um zu zeigen, dass das Schneidkammergehäuse 2 eine Schneidvorrichtung 5 mit Schneidkopf 7 und an dem Schneidkopf 7 angeordneten Schneidmessern 8 umschließt. Ferner umschließt das in Figur 1A gezeigte Schneidkammergehäuse einen Rotationsantrieb 6 mit horizontal angeordneter Rotationsachse 10. Das wannenförmige Schneidkammergehäuse 2 wird durch eine Trennfläche 13 in eine vertikal obere feststehende Schneidkammergehäusehälfte 11 und eine vertikal untere bewegbare Schneidkammergehäusehälfte 12 aufgeteilt. Der Rotationsantrieb 6 hängt in dieser Ausführungsform der Erfindung an der oberen feststehenden Schneidkammergehäusehälfte 11 und ragt aus dieser oberen Schneidkammergehäusehälfte 11 nach unten heraus, wie es die gestrichelten Linien und die Trennfläche 13 in Figur 1A verdeutlichen. Dazu ist der Rotationsantrieb 6 über ein entfernbares Befestigungselement 26 an der oberen feststehenden Schneidkammergehäusehälfte 11 angeordnet. Ferner ist auf der oberen feststehenden Schneidkammergehäusehälfte 11 sowohl ein Einlass 3 für Kühlfluid als auch ein Auslass 4 für Kühlfluid mit Granulaten angeordnet, die in der Längsseitenansicht der FIGUR 1A vertikal nach oben ausgerichtet sind.

Figur 1B ist eine Rückseitenansicht des in Figur 1A gezeigten Unterwassergranulators 1 mit wannenförmigem Schneidkammergehäuse 2. Wie diese Rückseitenansicht deutlich zeigt, ragt senkrecht aus dem wannenförmigen Schneidkammergehäuse 2 ein Einlass 3 für Kühlfluid heraus und ebenfalls vertikal ein Auslass 4 für Kühlfluid und Granulat. In der Rückseitenansicht der FIGUR 1B sind alternativ, wie die gestrichelten Linien zeigen, der Einlass 3' für Kühlfluid und der Auslass 4' für Kühlfluid mit Granulaten unter einem spitzen Winkel zueinander nahezu vertikal ausgerichtet. Durch die winklige Anordnung von Einlass 3' und Auslass 4' kann eine schraubenförmige Zirkulation des von oben einströmenden Kühlfluids von dem Einlass 3' in dem wannenförmigen Schneidkammergehäuse 2 in Richtung auf die Schneidvorrichtung 5 zusätzlich zu der als Umlenkstruktur 27 wirkenden wannenförmigen Ausbildung der unteren Gehäusehälfte 12 unterstützt werden.

Die wännenförmige Ausbildung des Schneidkammergehäuses der FIGUR 1A weist wie die FIGUR 1B zeigt nur teilweise geradlinige Randbereiche 28 in der Trennungsebene 13 auf, der Rest bildet eine gekrümmte Umlenkstruktur 27 aus.

Die untere Schneidkammergehäusehälfte 12 ist darüber hinaus vollkommen frei von Fluidzuläufen und Fluidabläufen und bildet eine mehr oder weniger abnehmbare, verschiebbare oder wegschwenkbare untere Kappe. Die Vorteile einer derartigen unteren wegschwenkbaren, verschiebbaren oder abnehmbaren unteren Schneidkammergehäusehälfte 12 wurden bereits oben ausführlich erörtert, so dass sich eine Wiederholung an dieser Stelle in Bezug auf die Figur 1 erübrigt.

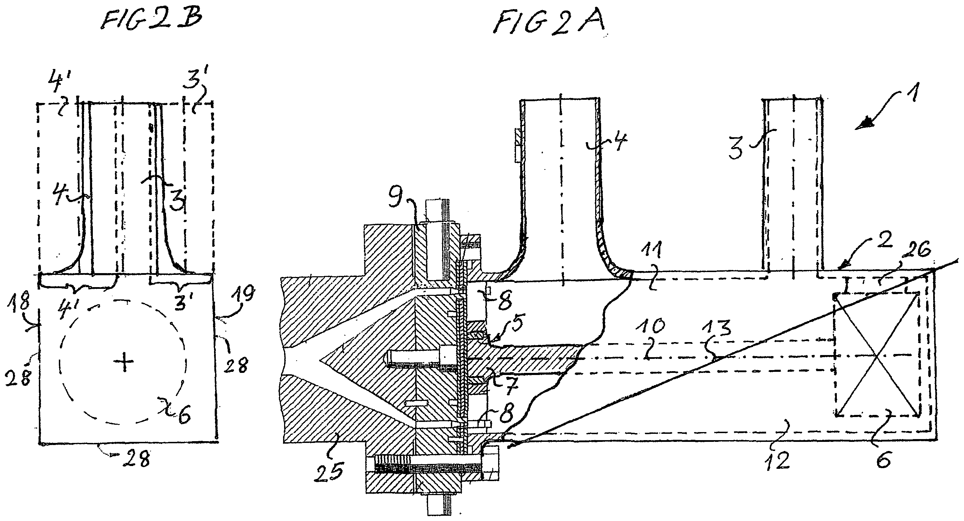

Figur 2 zeigt eine zweite Ausführungsform der Erfindung mit teilweise aufgeschnittenem quaderförmigem Schneidkammergehäuse 2 im Querschnitt, und zwar als Längsansicht in Figur 2A und als Rückseitenansicht in Figur 2B. Komponenten der Figur 2 und weiterer Figuren mit gleichen Funktionen wie in Figur 1 werden mit gleichen Bezugszeichen gekennzeichnet und nicht extra erörtert.

Der Unterschied zwischen der Ausführungsform gemäß Figur 1 und der in Figur 2 abgebildeten Ausführungsform ist am deutlichsten anhand der in Figur 2B gezeigten Rückseitenansicht zu erkennen. Durch die quaderförmige Ausbildung des Schneidkammergehäuses ergeben sich glatte geradlinige Randbereiche 28 entlang der Trennfläche 13. Diese geradlinigen Randbereiche 28 sind vorteilhaft geeignet, um beispielsweise mithilfe von Seitenflanschen die beiden Schneidkammergehäusehälften miteinander mediendicht zu verbinden. Gegenüber der Ausführungsform gemäß Figur 1, bei der die untere Gehäusehälfte halbkreisförmig ausgebildet ist und damit eine Zirkulation des über den Einlass 3 einströmenden Kühlfluids fördert, werden bei der Ausführungsform gemäß Figur 2 zur Stützung der Ausbildung eines zirkulierenden Kühlfluids in dem quaderförmigen Schneidkammergehäuse 2 zusätzlich nicht gezeigte Umlenkstrukturen vorgesehen. Außerdem kann durch ein paralleles Versetzen, wie es durch gestrichelte Linienführung in FIGUR 2B angedeutet wird, des Einlasses 3' für das Kühlmedium und des vertikal herausragenden Auslasses 4' für das Kühlmedium mit Granulaten die Zirkulation des Kühlmediums in dem Schneidkammergehäuse weiter unterstützt werden.

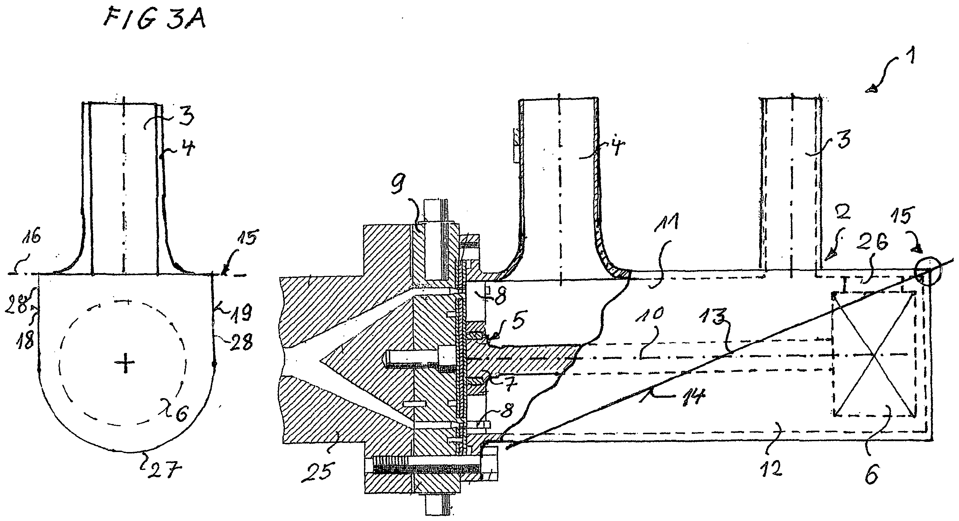

Figur 3A zeigt eine weitere Ausführungsform der Erfindung mit einem Schwenkgelenk 15 zwischen oberer und unterer Schneidkammergehäusehälfte 11 und 12. Dazu ist das Schwenkgelenk 15 am oberen Ende einer Diagonalen 14 als Trennfläche 13 des wannenförmigen Schneidkammergehäuses 2 angeordnet, wobei ihre Schwenkachse 16 horizontal und rechtwinklig zu der Austrittsrichtung des Kunststoffes aus der Lochplatte 9 oberhalb des Rotationsantriebs 6 ausgerichtet ist. Eine entsprechende Schwenkachse 16 kann an jedem geradlinigen Begrenzungsrand beispielsweise dem vorderen Begrenzungsrand 18 oder dem hinteren Begrenzungsrand 19, wie er in Figur 3A zu sehen ist, das Öffnen zwischen der oberen Gehäusehälfte 11 und der unteren Gehäusehälfte 12 auf einen Spalt begrenzen. Eine spaltweise Öffnung kann durchaus ausreichend sein, um in der Anlaufphase die Funktionalität der Lochplatte und der horizontal ausströmenden Kunststoffmasse sowie die Schneidfunktion der Schneidvorrichtung 5 zu prüfen, um diese Anlaufphasen gegenüber herkömmlichen Schneidkammergehäusestrukturen, wie es Figur 7 zeigt, zu verkürzen.

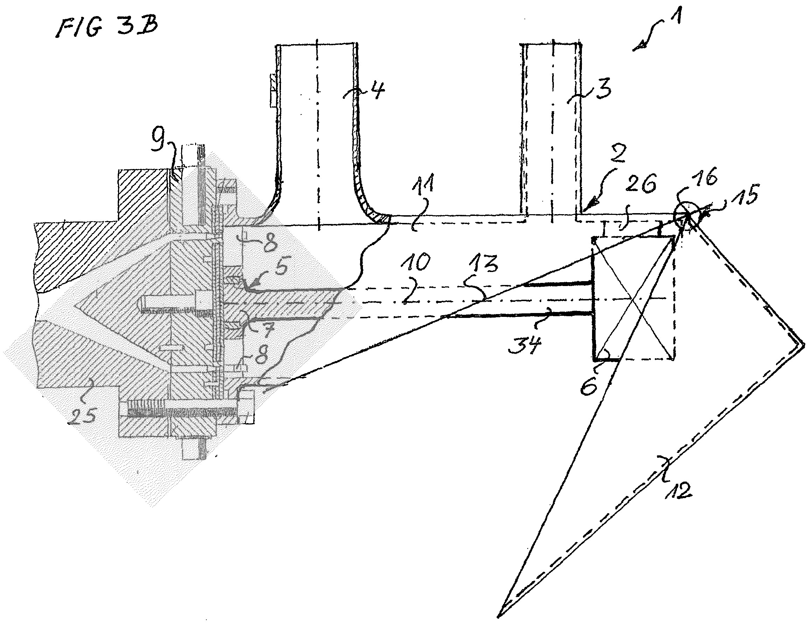

Figur 3B zeigt die Ausführungsform der Figur 3A mit abgeschwenkter unterer Schneidkammergehäusehälfte 12 um die horizontal ausgerichtete Schwenkachse 16 des Schwenkgelenks 15. Wie Figur 3B zeigt, kann mithilfe dieser Schwenk- oder Klappvorrichtung die untere bewegbare Gehäusehälfte 12 graduell entlang der Trennfläche 13 einen Spalt zwischen der oberen Schneidkammergehäusehälfte 11 und der unteren bewegbaren Schneidkammergehäusehälfte 12 von einer minimalen Spaltgröße bis zu einem vollständigen Wegschwenken der unteren Gehäusehälfte 12 ausgeführt werden.

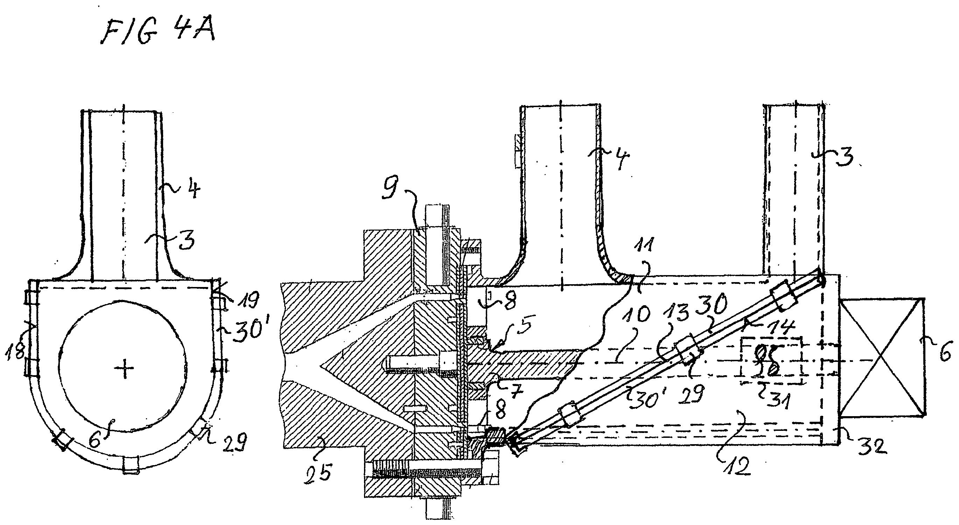

Figur 4A zeigt eine andere Ausführungsform der Erfindung mit verkürzten unteren und oberen Schneidkammergehäusehälften 11 und 12, die von einer Rückwand 32 zusammengehalten werden. Die untere Schneidkammergehäusehälfte 12 ist als U-förmige Abdeckung ausgebildet, die von unten an die obere feststehende Schneidkammergehäusehälfte 11 anbringbar ist. Auf der Rückwand 32 des Schneidkammergehäuses 2 dieser Ausführungsform ist der Rotationsantrieb 6 außerhalb der Schneidkammer 2 angeordnet. Mittels Klemmelementen 29 auf den Randbereichen der Schneidkammergehäusehälften 11 und 12 entlang der Trennfläche 13 sind die Schneidkammergehäusehälften 11 und 12 mediendicht fixierbar. Dazu weisen die Randbereiche der Gehäusehälften 11 und 12 entlang der Trennfläche 13 Flanschbereiche 30 bzw. 30' auf, die von den Klemmelementen umfassbar sind, und wobei die Flanschbereiche Dichtelemente aufweisen.

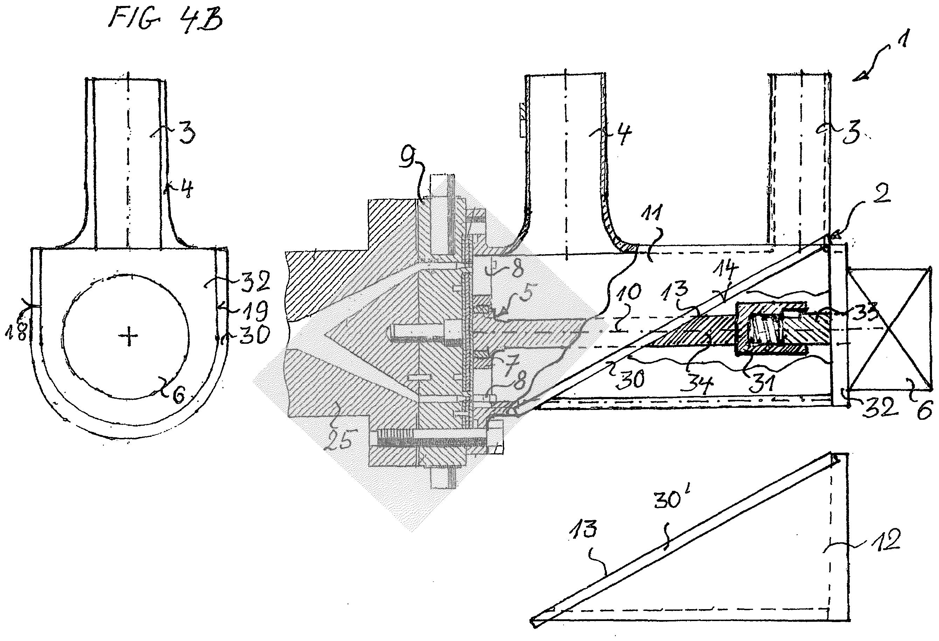

Figur 4B zeigt die Ausführungsform gemäß Figur 4A mit entfernter unterer Schneidkammergehäusehälfte 12. Die Schneidkammergehäusehälfte 12 ist eine abnehmbare Abdeckung, wobei der Randbereich zur Trennfläche 13 einen Flanschbereich 30' aufweist, der mit dem Flanschbereich 30 der oberen Gehäusehälfte 11 zusammenwirkt. An der oberen Gehäusehälfte 11 ist auch die Rückseite 32 des Schneidkammergehäuses 2 fixiert, die ihrerseits den außerhalb des Schneidgehäuses 2 fixierten Rotationsantrieb 6 trägt. Der Rotationsantrieb 6 ist über einen Wellenzapfen 33 und ein federelastisch vorgespannten Kopplungsglied 31 mit der Antriebswelle 34 eines selbst ausrichtenden und Schneidmesser 8 selbst justierenden Schneidkopfes 7, wie er z.B. aus der Druckschrift DE 296 24 638 U1 bekannt ist, verbunden. Mithilfe des Kopplungsglieds 31 kann der selbst justierende Schneidkopf 7 jederzeit bei entfernter unterer Gehäusehälfte 12 zu Inspektions-, Wartungs- und Instandsetzungszwecken dem Schneidkammergehäuse 2 entnommen werden.

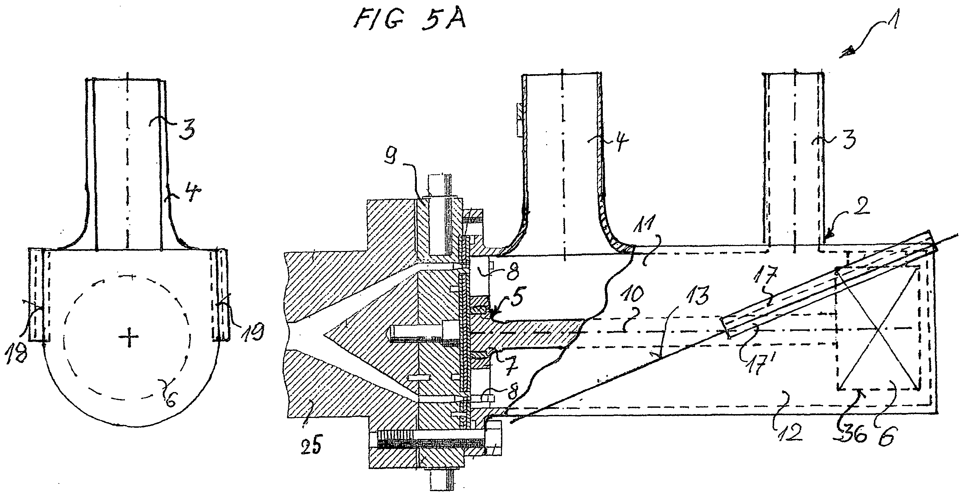

Figur 5A zeigt eine andere Ausführungsform der Erfindung mit in Eingriff stehenden Gleitschienen zwischen oberer und unterer Schneidkammergehäusehälfte. Diese Gleitschienen können nur in einem geradlinigen Randbereich des Schneidkammergehäuses entlang der Trennfläche 13 auf einem vorderen Begrenzungsrand 18, wie es die Rückseitenansicht der Figur 5A zeigt, oder auf der hinteren geradlinigen Begrenzungsrand 19 angeordnet werden. Diese in Eingriff stehenden Gleitschienen 17 und 17' auf geradlinigen Bereichen der Begrenzungsränder 18 und 19 der oberen Schneidkammergehäusehälfte 11 bzw. der unteren Schneidkammergehäusehälfte 12 ermöglichen ein geradliniges Verschieben der Gleitschienen 17 und 17' gegeneinander, wobei die Gleitschiene 17 gleichzeitig eine feststehende Gleitschiene 17 auf der oberen feststehenden Gehäusehälfte 11 bildet, während die Gleitschiene 17' auch in Form von Gleitelementen auf der unteren bewegbaren Gehäusehälfte 12 ausgebildet sein kann.

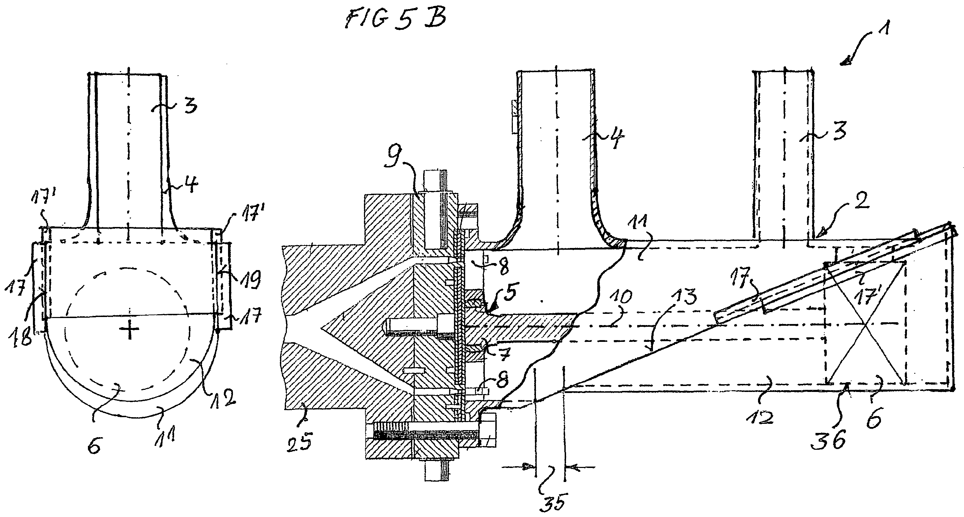

Beim Verschieben der unteren Gehäusehälfte 12 gegenüber der oberen Gehäusehälfte 11 wird ein Spalt 35 im Bereich der Schneidvorrichtung 5 geöffnet, wie es Figur 5B zeigt. Die Breite dieses Spaltes 35 wird durch einen unteren Rand 36 des Rotationsantriebs 6 in der gezeigten Ausführungsform begrenzt. Die Begrenzung des Spalts 35 in einem unteren Bereich unterhalb des Schneidkopfes 7 hat den Vorteil, dass selbst unter Einströmen von Kühlfluid die Funktion der Lochplatte 9 mit dem horizontalen Austritt von Kunststoffschmelze bei geringem Kühlfluidverlust aufrecht erhalten werden kann und die abgeschlagenen oder abgeschnittenen Granulate können in einer Anlaufphase nach unten durch den Spalt 35 abgeleitet und solange beobachtet werden, bis ein einwandfreies Gleichgewicht sowohl in thermischer Hinsicht als auch im Hinblick auf Produktionsstabilität gegeben ist.

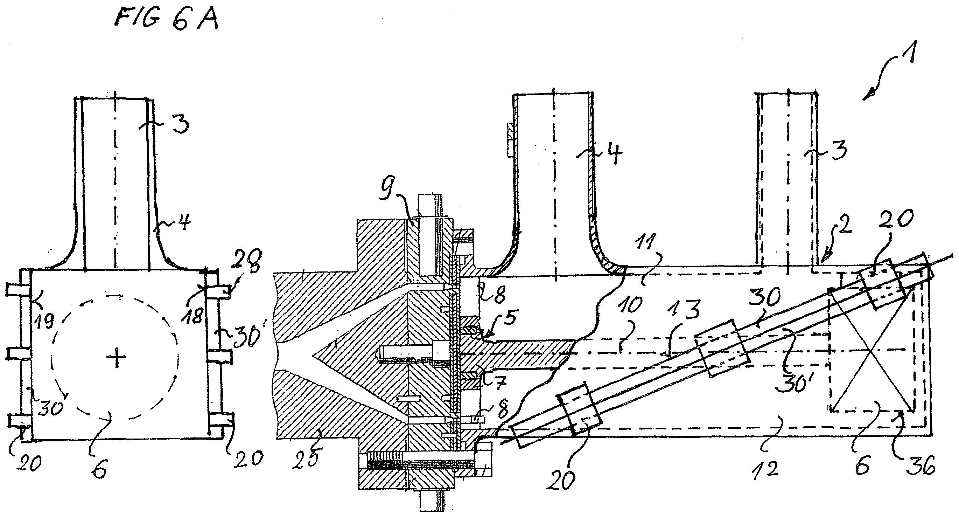

Figur 6A zeigt eine Ausführungsform der Erfindung mit Klinkenelementen 20 zwischen der oberen und der unteren Schneidkammergehäusehälfte 11 bzw. 12. In dieser Ausführungsform ist, wie es die Rückseitenansicht in Figur 6A zeigt, ein quaderförmiges Schneidkammergehäuse von Vorteil, da es geradlinige vordere und hintere Begrenzungsränder 18 bzw. 19 aufweist. Die geradlinigen vorderen und hinteren Begrenzungsränder 18 und 19 weisen an der oberen Schneidkammergehäusehälfte 11 Flanschbereiche 30 auf und an der unteren Gehäusekammerhälfte 12 Flanschbereiche 30' auf, die auf der vollen Länge der Begrenzungsränder 18 und 19 aufgrund der quaderförmigen Ausführung des Schneidkammergehäuses möglich sind. In dieser Ausführungsform sind auf jedem der Begrenzungsränder drei Klinkenelemente angeordnet, mit denen die Flanschbereiche 30 bzw. 30' mittels Einklinken der Klinkenelemente in die Flanschbereiche zusammengehalten werden.

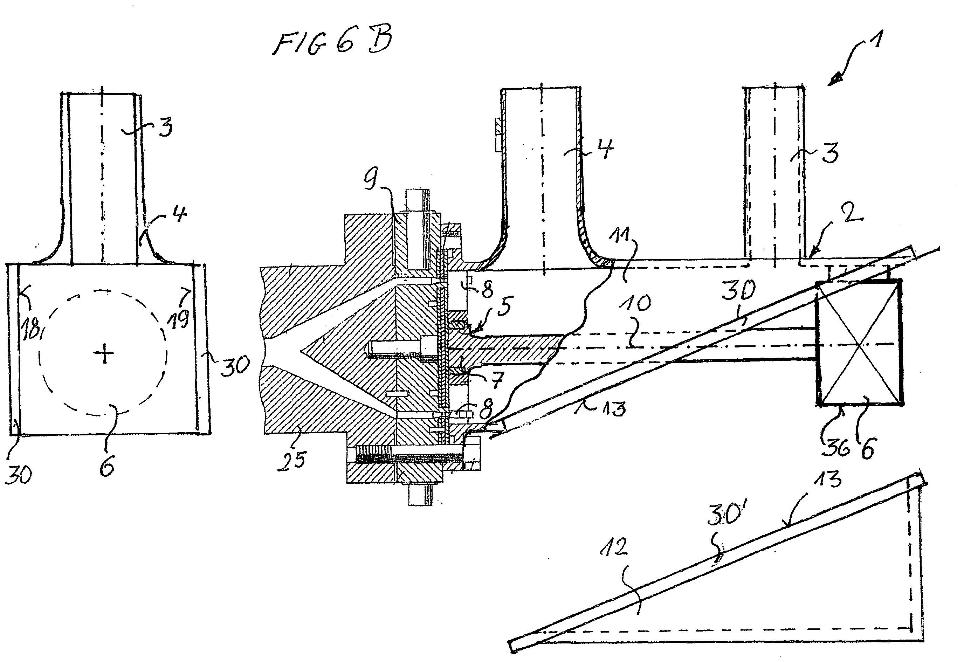

Unter Ausklinken bzw. Öffnen der Klinkenelemente 20 kann die untere Gehäusehälfte 12 von der oberen Gehäusehälfte 11, wie es Figur 6B zeigt, entfernt werden, so dass das Austreten von Kunststoffschmelze aus der Lochplatte in der Anfangsphase kontrolliert werden kann und auch das Abschneiden bzw. Abschlagen von Granulaten durch die rotierende Schneidvorrichtung beobachtbar ist. Darüber hinaus können die Klinkenelemente zwei Zustände aufweisen. In einem ersten Zustand werden sie nur teilweise geöffnet, so dass ein minimaler Spalt entsteht, durch den in der Anlaufphase das nicht verwendbare Material der Kunststoffschmelze und der nicht gleichmäßig abgeschlagenen Granulate nach unten und seitlich zwischen der oberen Gehäusehälfte 11 und der unteren Gehäusehälfte 12 austreten können. Erst nach Ausklinken in einen zweiten Klinkenzustand der Klinkenelemente 20 ist das in Figur 6B gezeigte Abtrennen der unteren Gehäusehälfte 12 möglich.

### Bezugszeichenliste

- 1: Unterwassergranulator
- 2: Schneidkammergehäuse
- 3: Einlass für Kühlfluid
- 4: Auslass für Kühlfluid mit Granulat
- 5: Schneidvorrichtung
- 6: Rotationsantrieb
- 7: Schneidkopf
- 8: Schneidmesser
- 9: Lochplatte
- 10: Rotationsachse
- 11: feststehende vertikal obere Gehäusehälfte
- 12: bewegbare vertikal untere Gehäusehälfte
- 13: Trennfläche
- 14: Diagonale
- 15: Schwenkgelenk
- 16: Schwenkachse
- 17: Gleitschiene
- 18: vorderer Begrenzungsrand
- 19: hinterer Begrenzungsrand
- 20: Klinkenelement
- 21: Ringflansch
- 22: horizontaler Rohransatz
- 23: rohrförmiger Einlass des Kühlmediums
- 24: rohrförmiger Auslass mit Granulat
- 25: Extrusionskopf
- 26: Befestigungselement
- 27: Umlenkstruktur
- 28: geradliniger Randbereich
- 29: Klemmelement
- 30,30': Flanschbereich
- 31: Kopplungsglied
- 32: Rückwand
- 33: Wellenzapfen
- 34: Antriebswelle
- 35: Spalt
- 36: unterer Rand des Rotationsantriebs

## Patentansprüche

1. Schneidkammergehäuse für Unterwassergranulierer (1) mit einem Einlass (3) für Kühlfluid und einem Auslass (4) für Kühlfluid mit Granulat, wobei das Schneidkammergehäuse (2) weiterhin eine Schneidvorrichtung (5) mit einem Rotationsantrieb (6) und einem Schneidkopf (7) mit rotierenden Schneidmessern (8) und einem Extrusionskopf (25) mit Lochplatte (9) für einen Austritt von strangförmig geformten, geschmolzenem Kunststoff umschließt, wobei die Austrittsrichtung des Kunststoffs und die Rotationsachse (10) der Schneidvorrichtung (5) horizontal ausgerichtet sind, und die Einlassrichtung des Kühlfluids und die Auslassrichtung des Kühlfluids mit Granulat senkrecht ausgerichtet sind,
**dadurch gekennzeichnet, dass**
das Schneidkammergehäuse (2) eine feststehende vertikal obere Gehäusehälfte (11) und eine bewegbare vertikal untere Gehäusehälfte (12) entlang einer schrägwinklig in Bezug auf eine horizontal ausgerichtete Austrittsrichtung des Kunststoffs angeordnete Trennfläche (13) aufweist, welche in Seitenansicht des Schneidkammergehäuses (2) gesehen schräg in Längsrichtung des Schneidkammergehäuses (2) oder in Frontalansicht der Lochplatte (9) gesehen schräg in Querrichtung des Schneidkammergehäuses (2) verläuft, so dass das Schneidkammergehäuse (2) entlang der Trennfläche (13) zumindest nach unten zu öffnen ist.

2. Schneidkammergehäuse nach Anspruch 1,
**dadurch gekennzeichnet, dass**
die Trennfläche (13) gegenüber der Austrittsrichtung von schräg unten unterhalb des Bereichs der Lochplatte (9) nach schräg oben oberhalb des Bereichs des Rotationsantriebs (6) oder gegenüber der Austrittsrichtung von schräg oben oberhalb des Bereichs der Lochplatte (9) nach schräg unten unterhalb des Bereichs des Rotationsantriebs (6) verläuft.

3. Schneidkammergehäuse nach Anspruch 1,
**dadurch gekennzeichnet, dass**
die Trennfläche (13) in Frontalansicht der Lochlatte (9) gesehen von links oder rechts oben schräg nach rechts bzw. links unten verläuft.

4. Schneidkammergehäuse nach Anspruch 1 oder 2,
**dadurch gekennzeichnet, dass**
die Trennfläche (13) entlang einer Diagonalen (14) des Schneidkammergehäuses (2) verläuft, die gegenüber der Austrittsrichtung von schräg unten unterhalb des Bereichs der Lochplatte (9) nach schräg oben oberhalb des Bereichs des Rotationsantriebs (6) verläuft.

5. Schneidkammergehäuse nach zumindest einem der Ansprüche 1 bis 4,
**dadurch gekennzeichnet, dass**
die untere bewegbare Gehäusehälfte (12) über wenigstens ein Schwenkgelenk (15) mit der oberen feststehenden Gehäusehälfte (11) schwenkbar verbunden ist.

6. Schneidkammergehäuse nach Anspruch 5,
**dadurch gekennzeichnet, dass**
zwischen der oberen feststehenden Gehäusehälfte (11) und der unteren bewegbaren Gehäusehälfte (12) das Schwenkgelenk (15) derart angeordnet ist, dass dessen Schwenkachse (16) horizontal und oberhalb des Bereichs des Rotationsantriebs (6) angeordnet ist und rechtwinklig zur Austrittsrichtung der Kunststoffschmelze aus der Lochplatte (9) ausgerichtet ist.

7. Schneidkammergehäuse nach Anspruch 5,
**dadurch gekennzeichnet, dass**
zwischen der oberen feststehenden Gehäusehälfte (11) und der unteren bewegbaren Gehäusehälfte (12) das Schwenkgelenk (15) angeordnet ist, dessen Schwenkachse (16) entlang der schrägen Trennfläche auf einem vorderen oder hinteren Begrenzungsrand (18, 19) des Schneidkammergehäuses (2) angeordnet ist.

8. Schneidkammergehäuse nach zumindest einem der Ansprüche 1 bis 4,
**dadurch gekennzeichnet, dass**
die untere bewegbare Gehäusehälfte (12) über wenigstens ein Drehgelenk mit der oberen feststehenden Gehäusehälfte (11) drehbar verbunden ist.

9. Schneidkammergehäuse nach Anspruch 6 bis Anspruch 8,
**dadurch gekennzeichnet, dass**
das Schwenkgelenk (15) zwei entlang der Schwenkachse (16) ausgerichtete Drehgelenke aufweist.

10. Schneidkammergehäuse nach zumindest einem der Ansprüche 1 bis 4,
**dadurch gekennzeichnet, dass**
die untere bewegbare Gehäusehälfte (12) mittels Gleitelementen auf Gleitschienen (17) der oberen feststehenden Gehäusehälfte (11) verschiebbar verbunden ist.

11. Schneidkammergehäuse nach Anspruch
10, **dadurch gekennzeichnet, dass**
die obere feststehenden Gehäusehälfte (11) im Bereich der schrägen Trennfläche (13) auf dem vorderen oder hinteren Begrenzungsrand (18,19) des Schneidkammergehäuses (2) jeweils eine vordere und hintere Gleitschiene (17) aufweist, und an der unteren bewegbaren Gehäusehälfte (12) Gleitelemente angeordnet sind, die mit den Gleit- schienen (17) verschiebbar in Eingriff stehen.

12. Schneidkammergehäuse nach zumindest einem der Ansprüche 1 bis
4, **dadurch gekennzeichnet, dass**
die untere bewegbare Gehäusehälfte (12) mittels Klinkenelementen (20) mit der oberen feststehenden Gehäusehälfte (11) einklinkbar verbunden ist.

13. Schneidkammergehäuse nach zumindest einem der Ansprüche 1 bis
4, **dadurch gekennzeichnet, dass**
die untere bewegbare Gehäusehälfte (12) mittels linearem Bajonettverschluss entlang der schrägen Trennfläche (13) mit der oberen feststehenden Gehäusehälfte (11) verriegelbar verbunden ist.

14. Schneidkammergehäuse nach zumindest einem der vorhergehenden Ansprüche, **dadurch gekennzeichnet, dass**
der Einlass (3) für Kühlfiluid und der Auslass (4) für Kühlfluid mit Granulat, an der oberen feststehenden Gehäusehälfte (11) angeordnet sind und
die Schneidvorrichtung (5) mit dem Rotationsantrieb (6) und der Schneidkopf (7) mit rotierenden Schneidmessern (8) an der oberen feststehenden Gehäusehälfte (11) angeordnet sind, wobei der Rotationsantrieb (6) teilweise aus der oberen feststehenden Gehäusehälfte (11) nach unten aus der Trennfläche (13) herausragt.

15. Schneidkammergehäuse nach zumindest einem der vorhergehenden Ansprüche, **dadurch gekennzeichnet, dass**
die untere bewegbare Gehäusehälfte (12) Umlenkstrukturen aufweist, die das aus dem am feststehenden Gehäuse (11) angeordneten Einlass (3) beabstandet zum Schneidkopf (7) senkrecht von oben in das Schneidkammergehäuse (2) eintretende Kühlfluid in eine schraubenförmige Zirkulation zwischen oberer und unterer Gehäusehälfte (11, 12) überführt und auf den Schneidkopf (7) zuführt und in den senkrecht nach oben oberhalb des Schneidkopfes (7) an dem feststehenden Gehäuse (11) angeordneten Auslass (4) des Kühlfluids mit Granulat senkrecht nach oben umlenkt und
die untere und obere Gehäusehälfte (11, 12) Druckgussmaterial einer Metalllegierung aufweisen.

## Claims

1. Cutting chamber housing for an underwater pelletizer (1), comprising an inlet (3) for cooling fluid and an outlet (4) for cooling fluid with pellets, wherein the cutting chamber housing (2) further comprises a cutting device (5) having a rotary drive (6) and a cutting head (7) with rotating cutting knives (8) and an extrusion head (25) having a perforated plate (9) for outputting molten plastic formed into strands, wherein the output direction of the molten plastic and the axis of rotation (10) of the cutting device (5) are oriented horizontally, and the inlet direction of the cooling fluid and the outlet direction of the cooling fluid with pellets are oriented orthogonally,
**characterized in that**
the cutting chamber housing (2) comprises a stationary upper housing half (11) and a movable lower housing half (12) along a separation plane (13) arranged at an oblique angle with respect to a horizontally-oriented outlet direction of the plastic material, which separation plane extends obliquely in the longitudinal direction of the cutting chamber housing (2) in a side view of the cutting chamber housing (2), or extends obliquely in the transverse direction of the cutting chamber housing (2) in a front view of the perforated plate (9), enabling the cutting chamber housing (2) to be opened at least downwards along the separation plane (13).

2. Cutting chamber housing according to claim 1,
**characterized in that**
the separation plane (13) extends relative to the output direction obliquely from below the region of the perforated plate (9) to the top above the region of the rotary drive (6), or extends relative to the output direction obliquely from the top above the region of the perforated plate (9) to the bottom below the region of the rotary drive (6).

3. Cutting chamber housing according to claim 1,
**characterized in that**
the separation plane (13), in a front view of the perforated plate (9), extends from the top left or right obliquely towards the bottom right or left, respectively.

4. Cutting chamber housing according to claim 1 or 2,
**characterized in that**
the separation plane (13) extends along a diagonal (14) of the cutting chamber housing (2) which extends, with respect to the outlet direction, from obliquely at the bottom below the region of the perforated plate (9) to obliquely the top above the region of the rotary drive (6).

5. Cutting chamber housing according to at least one of claims 1 to 4, **characterized in that**
the movable lower housing half (12) is swivel-mounted to the stationary upper housing half (11) by at least one swivel joint (15).

6. Cutting chamber housing according to claim 5,
**characterized in that**
the swivel joint (15) is arranged between the stationary upper housing half (11) and the movable lower housing half (12) such that its swivel axis (16) is arranged horizontally and above the region of the rotary drive (6) and at a right angle to the outlet direction of the molten plastic from the perforated plate (9).

7. Cutting chamber housing according to claim 5,
**characterized in that**
the swivel joint (15) is arranged between the stationary upper housing half (11) and the movable lower housing half (12) such that its swivel axis (16) is on a front or rear boundary edge (18, 19) of the cutting chamber housing (2).

8. Cutting chamber housing according to at least one of claims 1 to 4, **characterized in that**
the movable lower housing half (12) is rotatably connected with the stationary upper housing half (11) by at least one rotary joint.

9. Cutting chamber housing according to claim 6 to claim 8,
**characterized in that**
the swivel joint (15) comprises two rotary joints oriented along the swivel axis (16).

10. Cutting chamber housing according to at least one of claims 1 to 4,
**characterized in that**
the movable lower housing half (12) is slidably connected to the stationary upper housing half (11) by means of sliding elements on slide bar (17).

11. Cutting chamber housing according to claim 10,
**characterized in that**
the stationary upper housing half (11) comprises in each case one front and one rear slide bar (17) in the region of the oblique separation plane (13) on the front and rear boundary edge (18, 19) of the cutting chamber housing (2), and sliding elements are arranged on the movable lower housing half (12) which slidably engage with the slide bars (17).

12. Cutting chamber housing according to at least one of claims 1 to 4,
**characterized in that**
the movable lower housing half (12) is connected with the stationary upper housing half (11) with latching elements (20).

13. Cutting chamber housing according to at least one of claims 1 to 4,
**characterized in that**
the movable lower housing half (12) is lockably connected with the stationary upper housing half (11) by means of a linear bayonet lock along the oblique separation plane (13.

14. Cutting chamber housing according to at least one of the preceding claims, **characterized in that**
the inlet (3) for cooling fluid and the outlet (4) for cooling fluid with pellets are arranged on the stationary upper housing half (11), and
the cutting device (5) having the rotary drive (6) and the cutting head (7) having the rotating cutting knives (8) are arranged on the stationary upper housing half (11), wherein the rotary drive (6) partially projects out of the upper stationary housing half (11) downwards from the separation plane (13).

15. Cutting chamber housing according to at least one of the preceding claims, **characterized in that**
the movable lower housing half (12) comprises deflection structures to force the cooling fluid, which enters the cutting chamber housing (2) vertically from the top from the inlet (3) arranged on the stationary housing (11) spaced from the cutting head (7), into a spiral circulation between the upper and lower housing halves (11, 12), and guides it towards the cutting head (7) and deflects it vertically upward to the outlet (4) of the cooling fluid with pellets, which is arranged on the stationary housing (11) vertically upwards above the cutting head (7), and
the lower and upper housing halves (11, 12) comprise pressure casting material of a metal alloy.

## Revendications

1. Boîtier de chambre de coupe pour granulateur sous eau (1) comprenant une entrée (3) pour fluide de refroidissement et une sortie (4) pour fluide de refroidissement avec granulés, le boîtier de chambre de coupe (2) entourant en outre un dispositif de coupe (5) doté d'un entraînement en rotation (6) et d'une tête de coupe (7) avec des lames de coupe (8) rotatives et d'une tête d'extrusion (25) avec une plaque perforée (9) pour une sortie de matière plastique fondue formée en forme de barre, la direction de sortie de la matière plastique et l'axe de rotation (10) du dispositif de coupe (5) étant orientés horizontalement et la direction d'entrée du fluide de refroidissement et la direction de sortie du fluide de refroidissement avec granulés étant orientées verticalement,
**caractérisé en ce que**
le boîtier de chambre de coupe (2) comporte une moitié de boîtier verticalement supérieure fixe (11) et une moitié de boîtier verticalement inférieure mobile (12) le long d'une surface de séparation (13) disposée obliquement par rapport à une direction de sortie de la matière plastique orientée horizontalement, ladite surface de séparation s'étendant, vue dans une vue de côté du boîtier de chambre de coupe (2), obliquement dans la direction longitudinale du boîtier de chambre de coupe (2) ou, vue dans une vue de face de la plaque perforée (9), obliquement dans la direction transversale du boîtier de chambre de coupe (2), de telle sorte que le boîtier de chambre de coupe (2) est à ouvrir au moins vers le bas le long de la surface de séparation (13).

2. Boîtier de chambre de coupe selon la revendication 1,
**caractérisé en ce que**
la surface de séparation (13) s'étend à l'opposé de la direction de sortie obliquement du bas en dessous de la zone de la plaque perforée (9) vers le haut au-dessus de la zone de l'entraînement en rotation (6) ou à l'opposé de la direction de sortie obliquement du haut au-dessus de la zone de la plaque perforée (9) vers le bas en dessous de la zone de l'entraînement en rotation (6).

3. Boîtier de chambre de coupe selon la revendication 1,
**caractérisé en ce que**
la surface de séparation (13) s'étend, vue dans la vue de face de la plaque perforée (9), obliquement d'en haut à gauche ou à droite à en bas à droite ou à gauche.

4. Boîtier de chambre de coupe selon la revendication 1 ou 2,
**caractérisé en ce que**
la surface de séparation (13) s'étend le long d'une diagonale (14) du boîtier de chambre de coupe (2), qui s'étend à l'opposé de la direction de sortie obliquement du bas en dessous de la zone de la plaque perforée (9) vers le haut au-dessus de la zone de l'entraînement en rotation (6).

5. Boîtier de chambre de coupe selon au moins une des revendications 1 à 4, **caractérisé en ce que**
la moitié de boîtier inférieure mobile (12) est reliée de manière pivotante à la moitié de boîtier supérieure fixe (11) par le biais d'au moins une articulation de pivotement (15).

6. Boîtier de chambre de coupe selon la revendication 5,
**caractérisé en ce que**
l'articulation de pivotement (15) est disposée entre la moitié de boîtier supérieure fixe (11) et la moitié de boîtier inférieure mobile (12) de telle manière que son axe de pivotement (16) est disposé horizontalement et au-dessus de la zone de l'entraînement en rotation (6) et est orienté perpendiculairement à la direction de sortie de la matière plastique fondue hors de la plaque perforée (9).

7. Boîtier de chambre de coupe selon la revendication 5,
**caractérisé en ce que**
l'articulation de pivotement (15), dont l'axe de pivotement (16) est disposé le long de la surface de séparation oblique sur un bord de délimitation (18, 19) avant ou arrière du boîtier de chambre de coupe (2), est disposée entre la moitié de boîtier supérieure fixe (11) et la moitié de boîtier inférieure mobile (12).

8. Boîtier de chambre de coupe selon au moins une des revendications 1 à 4, **caractérisé en ce que**
la moitié de boîtier inférieure mobile (12) est reliée de manière rotative à la moitié de boîtier supérieure fixe (11) par le biais d'au moins une articulation tournante.

9. Boîtier de chambre de coupe selon la revendication 6 à la revendication 8, **caractérisé en ce que**
l'articulation de pivotement (15) comporte deux articulations tournantes orientées le long de l'axe de pivotement (16).

10. Boîtier de chambre de coupe selon au moins une des revendications 1 à 4, **caractérisé en ce que**
la moitié de boîtier inférieure mobile (12) est reliée de manière coulissante sur des glissières (17) de la moitié de boîtier supérieure fixe (11) au moyen d'éléments de glissement.

11. Boîtier de chambre de coupe selon la revendication 10,
**caractérisé en ce que**
la moitié de boîtier supérieure fixe (11) comporte, dans la zone de la surface de séparation (13) oblique, sur le bord de délimitation (18, 19) avant ou arrière du boîtier de chambre de coupe (2), respectivement une glissière (17) avant et arrière, et des éléments de glissement sont disposés sur la moitié de boîtier inférieure mobile (12), lesquels sont en prise de manière coulissante avec les glissières (17).

12. Boîtier de chambre de coupe selon au moins une des revendications 1 à 4, **caractérisé en ce que**
la moitié de boîtier inférieure mobile (12) est reliée de manière à pouvoir être encliquetée à la moitié de boîtier supérieure fixe (11) au moyen d'éléments d'encliquetage (20).

13. Boîtier de chambre de coupe selon au moins une des revendications 1 à 4, **caractérisé en ce que**
la moitié de boîtier inférieure mobile (12) est reliée de manière verrouillable à la moitié de boîtier supérieure fixe (11) au moyen d'une fermeture à baïonnette linéaire le long de la surface de séparation (13) oblique.

14. Boîtier de chambre de coupe selon au moins une des revendications précédentes,
**caractérisé en ce que**
l'entrée (3) pour fluide de refroidissement et la sortie (4) pour fluide de refroidissement avec granulés sont disposées sur la moitié de boîtier supérieure fixe (11) et
le dispositif de coupe (5) avec l'entraînement en rotation (6) et la tête de coupe (7) avec lames de coupe (8) rotatives sont disposés sur la moitié de boîtier supérieure fixe (11), l'entraînement en rotation (6) dépassant en partie de la surface de séparation (13) vers le bas depuis la moitié de boîtier supérieure fixe (11).

15. Boîtier de chambre de coupe selon au moins une des revendications précédentes,
**caractérisé en ce que**
la moitié de boîtier inférieure mobile (12) comporte des structures de déviation, qui transportent le fluide de refroidissement entrant verticalement par le haut dans le boîtier de chambre de coupe (2) de manière espacée de la tête de coupe (7) depuis l'entrée (3) disposée sur le boîtier fixe (11), dans une circulation hélicoïdale entre les moitiés de boîtier supérieure et inférieure (11, 12) et l'alimentent sur la tête de coupe (7) et le dévient verticalement vers le haut dans la sortie (4) du fluide de refroidissement avec granulés disposée verticalement vers le haut au-dessus de la tête de coupe (7) sur le boîtier fixe (11) et
les moitiés de boîtier supérieure et inférieure (11, 12) comportent un matériau coulé sous pression d'un alliage métallique.
